# EUROPÄISCHE PATENTSCHRIFT

(11) **EP 3 678 835 B1**
(45) Veröffentlichungstag und Bekanntmachung des Hinweises auf die Patenterteilung: **06.04.2022**
(21) Anmeldenummer: 18765875.2
(22) Anmeldetag: 06.09.2018
(51) Int. Cl.: B29C 49/12, B29C 49/42

(54) **FORMFÜLLSTATION**
FORM AND FILLING STATION
STATION DE MOULAGE ET REMPLISAGE

(30) Priorität: 08.09.2017 DE 102017120812
(43) Veröffentlichungstag der Anmeldung: 15.07.2020
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 21039 Börnsen (DE)
(74) Vertreter: Eisenführ Speiser
(86) Internationale Anmeldenummer: PCT/EP2018/074045
(87) Internationale Veröffentlichungsnummer: WO 2019/048563

(56) Entgegenhaltungen:
- EP-A1- 1 258 336
- EP-A2- 2 540 473
- DE-A1-102013 110 088
- DE-A1-102014 016 140
- DE-A1-102014 017 871

## Beschreibung

Die Erfindung betrifft eine Formfüllvorrichtung nach dem Oberbegriff des Anspruchs 1 Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 4340291 A1). Typischerweise weist eine Blasmaschine eine Heizeinrichtung zum Temperieren bzw. zum thermischen Konditionieren der Vorformlinge sowie eine Blaseinrichtung mit wenigstens einer Blasstation auf, in deren Bereich der jeweils zuvor temperierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 4340291 A1 erläutert. Der grundsätzliche Aufbau einer Blasstation ist in der DE 4212583 A1 beschrieben. Möglichkeiten der Temperierung der Vorformlinge sind in der DE 2352926 A1 erläutert. Unter Temperierung oder thermischer Konditionierung wird dabei verstanden, dass der Vorformling auf eine für die Blasumformung geeignete Temperatur erwärmt und ggf. ein Temperaturprofil dem Vorformling aufgeprägt wird. Die Blasformung von Behältern aus Vorformlingen unter zusätzlicher Verwendung einer Reckstange ist ebenfalls bekannt. Die EP 1 258 336 A1 und die EP 2 540 473 A2 zeigen weitere Beispiele für Blasmaschinen, in denen Vorformlinge mithilfe eines Druckgases zu Behältern expandiert werden.

Die DE 10 2013 110 088 A1 offenbart ein pneumatisch betätigtes Blasluftventil, das in einer wie im vorstehenden Absatz erläuterten Blasmaschine zum Einsatz kommt, nämlich zur Steuerung der Blasluftzuführung. Innerhalb dieses Blasluftventils ist ein Steuerkolben in beweglicher und abgedichteter Form innerhalb einer Steuerkammer des Ventils bewegbar.

Die Steuerkammer soll zur Steuerung der Bewegung des Steuerkolbens mit einem Steuerfluid beaufschlagt werden. Eine Abdichtung der verschiedenen Kammern und Räume erfolgt einerseits durch einen Membrankörper, der die Steuerkammer in 2 Teilkammern unterteilt, nämlich in eine erste Teilkammer, in der sich der Steuerkolben befindet, und in eine 2. Teilkammer, in der sich der Steuerkolben nicht befindet. Andererseits weist der Steuerkolben eine Ringdichtung auf, um gegenüber der zylindrischen Innenwand der 1. Teilkammer abgedichtet bewegbar zu sein, um diese 1. Teilkammer weiter in eine membrannahe und eine membranferne Unterkammer zu unterteilen. Schließlich ist eine weitere Dichtung vorgesehen, die den Arbeitsraum, der von Blasluft beaufschlagt wird, von der Steuerkammer trennt, die mit einem Steuerfluid beaufschlagt wird. Durch diese Dichtung hindurch ist der Arbeitskolben des Ventils geführt, der vom Steuerkolben angetrieben wird.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7914726 B2. Ein weiteres Beispiel zeigt die DE 2010007541 A1. Ein drittes und viertes Beispiel zeigen die DE 10 2014 017 871 A1 und die DE 10 2014 016 140 A1.

Ein wichtiger Grundsatz beim Form- und Füllprozess ist die Gewährleistung absoluter Reinheit aller mit dem Füllgut in Kontakt kommenden Bereiche der Formfüllstationen. Bereits geringe Verunreinigungen aus der Umgebung der Formfüllstationen oder aus Spalträumen innerhalb der Formfüllstation die mit dem Füllgut in Kontakt kommen, können zur Kontamination des Füllgutes und damit zur Unbrauchbarkeit der verfüllten Produkte führen. Speziell bei der Verfüllung von zuckerhaltigen Flüssigkeiten besteht in besonderem Maße die Gefahr, dass in Spalträumen der Formfüllstation zurückbleibende Füllgutreste bei Kontakt mit aus der Umgebung der Formfüllstationen stammenden Mikroorganismen eine Schimmel- oder Pilzbildung auslösen. Die Spalträume der Formfüllstationen werden daher in regelmäßigen Abständen gespült und von jeglichen Füllgutrückständen befreit. Problematisch ist allerdings, dass auch zwischen den Reinigungsvorgängen, also insbesondere während der Verfüllung des Füllgutes Verunreinigungen und Mikroorganismen aus der Umgebung mit der Formfüllstation in Kontakt kommen können. Um diese Verunreinigungen zu verhindern, können die Formfüllstationen der Füllvorrichtung zum Beispiel mit einem Luftschleier beaufschlagt werden. Damit wird eine Gasbarriereschicht ausgebildet, die Verunreinigungen aus der Umgebung der Formfüllstationen fernhält.

Eine fortwährende Motivation bei der Weiterentwicklung bekannter Formfüllvorrichtungen der gattungsgemäßen Art besteht darin, die bisher bekannten Schutzmöglichkeiten zur Abschottung sensibler Arbeitsbereiche der Formfüllvorrichtung und insbesondere zum Schutz enger Spalträume der Füllstation vor Verunreinigung zu verbessern. Der Schutz der Füllstationen ist insbesondere im Bereich sich bewegender Körperteile sehr schwierig, da die Schutzmaßnahmen auch bei hohen Relativgeschwindigkeiten und zwischen sich mit großen Verschiebungsstrecken beweglichen Teilen wirksam sein müssen.

Der Erfindung liegt daher die Aufgabe zugrunde, eine Füllvorrichtung mit Füllstationen bereitzustellen, die bei hohen Form- und Füllgeschwindigkeiten einen verbesserten Schutz des Füllgutes gegen Verunreinigungen bietet.

Diese Aufgabe wird gelöst durch eine Formfüllmaschine mit den Merkmalen des Anspruchs 1. Vorteilhafte Ausgestaltungen sind in den Unteransprüchen angegeben.

Erfindungsgemäß ist eine Formfüllvorrichtung zur Herstellung von mit einem flüssigen Füllgut gefüllten Behältern aus thermisch konditionierten Vorformlingen, mit wenigstens einer Formfüllstation zum Formen und Füllen eines Vorformlings, wobei die Formfüllstation eine längsverschieblich gelagerte Reckstange zum Führen und Strecken des Vorformlings aufweist, und wobei die Formfüllstation mindestens einen Spaltraum zwischen zwei zueinander verschieblich gelagerten Körperteilen der Formfüllstation aufweist, der in einer Gebrauchsstellung der Formfüllstation mittels einer auf einer Oberfläche eines der Körperteile wirkenden Spaltdichtung in einen Hochdruckbereich und einen Niederdruckbereich abdichtend getrennt ist, wobei der Hochdruckbereich kommunizierend mit dem Innenraum des Vorformlings verbindbar ist und wobei der Niederdruckbereich mittels einer flexiblen, jeweils dichtend mit den zueinander beweglichen Körperteilen verbundenen Dichtmembran abgedichtet ist.

Vorformlingskörperseitig wird der an einer Fülldüse mit dem Innenraum des Vorformlings verbindbare Spaltraum mit dem abzufüllenden Füllgut befüllt. Wegen des hohen Fülldrucks, der im Bereich von bis zu 35 bar oder bei über 35 bar liegen kann, wird dieser Bereich auch als Hochdruckbereich bezeichnet. Dafür ist der Hochdruckbereich in nicht näher erläuterter Art mit einem Vorratsbehälter verbindbar.

Zur Abdichtung eines mit dem Innenraum des Vorformlings kommunizierend verbindbaren Spaltraumes zwischen zwei beweglichen Körperteilen der Formfüllstation wäre grundsätzlich denkbar, allein eine Spaltdichtung oder allein eine Dichtmembran zu verwenden. Eine Spaltdichtung dichtet auf einer Oberfläche eines oder beider der beweglichen Körperteile. Eine Dichtmembran wird hingegen an ihren Randbereichen kraftform- und/oder stoffschlüssig mit den beiden Körperteilen verbunden, sodass eine hermetisch dichte Verbindung zwischen den Körperteilen entsteht.

Im Rahmen der Erfindung werden unter Spaltdichtungen sowohl solche Dichtungen verstanden, die auf der Oberfläche gleitend dichten, also die Oberfläche des Dichtpartners berühren als auch solche Dichtungen, die berührungslos dichtend mit der Oberfläche des Dichtpartners zusammenwirken. Erfindungsgemäße Dichtmembranen können insbesondere in der Art einer Balgdichtung ausgebildet sein. Berührungslos wirkende Spaltdichtungen können zum Beispiel als Drosselbuchsen oder Drosseldichtungen ausgeführt sein, wobei solche Drosseldichtungen insbesondere als Schwimmringdrossel oder Stirnspaltdrossel ausgebildet sein kann. Berührend dichtende Spaltdichtungen können beispielsweise aus Dichtringen ausgebildet sein. Berührungslose Dichtungen werden zur Abdichtung der beweglichen Teile der Formfüllstation als Dichtungsart bevorzugt, da sie sich insbesondere zur Abdichtungen von Körperteilen eignen, die sich mit sehr hohen Relativgeschwindigkeiten zueinander bewegen. Anders als bei Berührungsdichtungen treten keine hohe Reibung und kein starker Verschleiß auf. Aufbau und Wirkweise von berührungslosen Spaltdichtungen wie zum Beispiel Drosselbuchsen sind aus dem Stand der Technik bekannt, so dass auf eine detaillierte Erläuterung verzichtet werden kann.

Erfindungsgemäße Spaltdichtungen wirken entlang eines ausgedehnten Oberflächenbereiches eines Dichtpartners, sodass bei der linearen Verschiebung der Dichtpartner zueinander, ein Flächenbereich der mit der Spaltdichtung zusammenwirkenden Oberfläche abwechselnd auf der Niederdruckseite und auf der Hochdruckseite exponiert ist. Die abwechselnd in den Niederdruckbereich und den Hochdruckbereich verschobene Dichtfläche wird also ständig mit dem Füllgut benetzt, sodass es schon funktionsbedingt zu einem Kontakt von Füllgutrückstanden auf den Dichtflächen mit etwaigen Verunreinigungen auf der Niederruckseite der Spalträume kommt.

Neben der an den Dichtflächen zurückbleibenden Füllgutrückstanden kann es trotz der guten Dichteigenschaften einer Spaltdichtung insbesondere beim Verfüllen von karbonisierten Flüssigkeiten zu einem überdruckbedingten Durchdritt von Flüssigkeiten in den Niederruckbereich kommen. Ohne weitere Eindämmung können solche Leckagen große Teile der Formfüllstation benetzen und führen zu Verunreinigungen, die nur mit großem Reinigungsaufwand zu beseitigen sind.

Flexible Dichtmembranen erlauben je nach Membrangröße und Form große Relativbewegungen zwischen zueinander bewegbaren Körperteilen und verhindern wegen ihrer hermetisch dichten Verbindung mit den Körperteilen jeglichen Durchtritt von Flüssigkeiten oder Eintritt von Mikroorganismen in den Spaltraum. Problematisch ist allerdings, dass Dichtmembranen höchstens unter Verwendung besonders zäher Materialien dem Fülldruck von bis zu 35 bar oder mehr als 35 bar Stand halten. Für große Relativbewegungen von bis zu 250 mm oder von mehr als 250 mm zwischen den beweglichen Körperteilen lassen sich keine herkömmlichen Dichtmembranen einsetzen, die dem hohen Fülldruck standhalten und gleichzeitig hohe Standzeiten garantieren.

Zur Lösung dieser Problematik wird deshalb vorgeschlagen, die Spalträume durch die Kombination von Spaltdichtungen und Dichtmembranen in einen Hochdruckbereich und einen gegen die Umgebung abgeriegelten Niederdruckbereich aufzuteilen. Diese Aufteilung der Spalträume hat gleich mehrere Vorteile. Ein erster Vorteil liegt darin, dass die durch die Spaltdichtungen hindurchdringenden sowie die durch eine Benetzung der Dichtflächen mit dem Füllgut in den Niederdruckbereich eindringenden Leckagen in einem zur Umgebung hermetisch abgedichteten Raum aufgefangen werden können. Das verhindert eine Verteilung auf weitere Oberflächenbereiche der Formfüllstation und es kann keine Schimmelbildung oder Pilzbildung durch Kontakt der Leckagen mit aus der Umgebungsluft der Formfüllstation aufgenommenen Mikroorgansimen stattfinden. Ein weiterer Vorteil liegt darin, dass die Niederdruckbereiche abgedichtete Hohlräume ausbilden, die während des Form- und Füllvorgangs mit einer Spülflüssigkeit oder einem Spülgas gefüllt werden können. Der Niederdruckbereich kann dabei mit einem Umgebungsdruck oder einem Überdruck beaufschlagt sein. Zur Erzielung besonders guter Reinigungseffekte kann das Spülfluid insbesondere zirkulierend in die zwischen den Spaltdichtungen und den Dichtmembranen ausgebildeten Niederdruckbereiche eingeschleust werden. Eine Reinigung der Formfüllstation also somit schon während der Produktion der mit dem Füllgut befüllten Behälter stattfinden.

Die Erfindung ermöglicht also die Erzeugung einer besonders hygienischen Umgebung innerhalb und außerhalb der Formfüllstation, was auch bei hohen Produktionsgeschwindigkeiten einen zuverlässigen Schutz des Füllgutes gegen Verunreinigung erlaubt. Außerdem verringern sich die durch Reinigungsmaßnahmen erforderlichen Standzeiten der Formfüllvorrichtung, was die Wirtschaftlichkeit der Maschine verbessert.

Zwischen beweglichen Körperteilen der Formfüllstation können große relative Verschiebungswege von bis zu 250 mm oder sogar mehr als 250 mm anfallen. Solche langen Verschiebungswege können zum Beispiel zwischen einer zur Befüllung des Vorformlings vorgesehenen Fülldüse und der Reckstange anfallen. Zur Abdichtung von Spalträumen, die Verschiebungsstrecken im Bereich von 250 mm erlauben, gab es bisher keine zufriedenstellenden Lösungsansätze. Teilweise wurde versucht, den Spaltraum zwischen den beweglichen Körperteilen allein mit einer Dichtmembran abzudichten. Wegen des hohen Fülldruckes von bis zu 35 bar oder sogar mehr als 35 bar musste mit hohem Verschleiß der Dichtmembranen gerechnet werden und es mussten Membranmaterialen benutzt werden, die dem hohen Fülldruck zwar standhalten konnten aber damit sehr inflexibel wurden, was die Verschiebung der Körperteile zueinander erschwerte.

In der üblichen Ausgestaltung weist die Formfüllstation mindestens zwei axial zueinander verschieblich angeordnete Körperteile auf, von denen ein erster Körperteil zumindest in einem Längsabschnitt in Umfangsrichtung von dem zweiten Körperteil umschlossen ist. Einer der Körperteile ist erfindungsgemäß die Reckstange der Formfüllstation. Erfindungsgemäß ist daher daran gedacht, dass einer der Spaltraume zwischen der Reckstange und einem die Reckstange zumindest in einem Längsabschnitt in Umfangsrichtung umschließenden ersten hülsenförmigen Körperteil ausgebildet ist.

Zur Befüllung eines Vorformlings weist eine Füllstation üblicherweise eine mit einem Mündungsbereich des Vorformlings in dichtende Anlage bringbare Fülldüse auf. Der erste, die Reckstange zumindest in einem Längsabschnitt in Umfangsrichtung umschließende Körperteil kann ein dichtend mit einem Körperbereich der Fülldüse zusammenwirkender Hülsenkörper sein. Insbesondere kann der dichtend mit einem Körperbereich der Fülldüse zusammenwirkende Hülsenkörper ein hülsenförmiger Schließstempel sein, der auf einem Körperbereich der Fülldüse dichtend in eine einen Füllkanal der Fülldüse öffnende Offenstellung und in eine den Füllkanal der Fülldüse schließende Schließstellung bringbar ist. Kopfseitig ist die Reckstange mit einer Dichtmembran gegen den hülsenförmigen Körperteil abgedichtet, wobei die Dichtmembran einerseits kraft- form- und/oder stoffschlüssig mit der Reckstange und andererseits kraft- form- und/oder stoffschlüssig mit dem hülsenförmigen Körperteil verbunden ist. Der an dem als Schließstempel ausgebildeten ersten Körperteil dichtend wirkende Körperbereich der Fülldüse bildet dabei die Spaltdichtung aus.

Es versteht sich, dass die die Spalträume begrenzenden, zueinander beweglichen Körperteile der Formfüllstation selbst aus mehreren jeweils dichtend und unbeweglich aneinander befestigten und/oder aus verschieblich gegeneinander abgedichteten Körperteilen bestehen können.

Nicht nur bei einer Formfüllstation mit mehreren zueinander verschiebbar angeordneten, insbesondere teleskopisch axial zueinander verschiebbar angeordneten Körperteilen können innerhalb der Formfüllstation mehrere Spalträume ausgebildet sein, die erfindungsgemäß in Hochdruckbereiche zur Führung des Füllgutes und in mit gegen eine Umgebung mit Dichtmembranen abgedichtete Niederruckbereiche unterteilt sind. Insbesondere bei der teleskopischen Anordnung von zueinander verschieblichen Körperteilen ist daran gedacht, dass einer der Spalträume zwischen einem die Reckstange zumindest in einem Längsabschnitt in Umfangsrichtung umschließenden ersten hülsenförmigen Körperteil und einem das erste hülsenförmige Körperteil zumindest in einem Längsabschnitt in Umfangsrichtung umschließenden zweiten hülsenförmige Körperteil ausgebildet ist.

In einer bevorzugten Ausgestaltung der Erfindung kann vorgesehen sein, dass einer der Spalträume zwischen einem äußeren Gehäuseblock der Formfüllstation und einem zumindest in einem Längsabschnitt in Umfangsrichtung von dem Gehäuseblock umschlossenen innenliegenden Körperteil ausgebildet ist.

Hinsichtlich der Form der Spalträume ist insbesondere daran gedacht, dass zumindest einer der Spalträume ein Ringspaltraum ist, der zwischen zwei axial zueinander verschieblichen Körperteilen der Formfüllstation ausgebildet ist. In einer bevorzugten Ausführungsform der Formfüllstation sind sämtliche von Dichtmembranen und Spaltdichtungen abgedichteten Spalträume ringspaltförmig ausgebildet.

Insbesondere zur kopfseitigen und bodenseitigen Abdichtung des äußeren Gehäuseblocks der Formfüllstation gegen einen in einem Durchgang des Gehäuseblocks verschieblich geführten Körperteil können auf beiden Seiten des Durchgangs Dichtmembranen vorgesehen sein, die jeweils einerseits mit dem Öffnungsrand des Gehäuseblocks und andererseits mit dem in dem Durchgang verschieblich geführten Körperteil verbunden sind. Um in dem von den Dichtmembranen abgedichteten Spaltraum auch einen Hochdruckbereich auszubilden, können in dem Spaltraum zwischen den Dichtmembranen zwei in einem Abstand angeordnete Spaltdichtungen vorgesehen sein. Zur kopfseitigen und bodenseitigen Abdichtung des Gehäuseblocks oder zur Abdichtung anderer Körperteile der Formfüllstation kann also vorgesehen sein, dass einer der Spalträume einen zwischen zwei Spaltdichtungen ausgebildeten Hochdruckbereich aufweist und zwei jeweils mit einer Dichtmembran z.B. gegen die Umgebung abgedichtete Niederdruckbereiche.

Um insbesondere bei der Relativbewegung der Körperteile einen Druckausgleich zwischen mehreren Niederdruckbereichen zu ermöglichen und/oder um eine Fluidverbindung zur Durchleitung eines Spülfluids herzustellen, ist daran gedacht, dass die Formfüllstation mindestens zwei zwischen einer Spaltdichtung und einer Dichtmembran ausgebildete Niederdruckbereiche aufweist, die mittels eines Niederdruckfluidkanals kommunizierend miteinander verbunden sind.

In einer bevorzugten Ausgestaltung ist vorgesehen, dass die Formfüllstation mindestens zwei von einer Spaltdichtung gegen einen Niederdruckbereich abgedichtete Hochdruckbereiche aufweist, die zueinander verschiebbar angeordnet sind, wobei diese zwei zueinander verschieblichen Hochdruckbereiche mittels eines Hochdruckfluidkanals kommunizierend miteinander verbunden sind. Der Hochdruckfluidkanal erlaubt eine Durchleitung der Füllgutes von einem ersten Hochdruckbereich in einen nächsten Hochdruckbereich. Bei einem teleskopartigen Aufbau der Formfüllstation können zwei von einem hülsenartigen Körperteil getrennte Hochdruckbereiche ausgebildet sein, die bei einer Verschiebung des hülsenartigen Körperteils axial zueinander verschoben werden. Der Hochdruckfluidkanal zwischen den beiden Hochdruckbereichen kann beispielsweise mittels einer radialen Durchgangsbohrung in der Wand des hülsenartigen Körperteils ausgebildet sein, die sich in einem überlappenden Bereich der Hochdruckbereiche befindet.

In einer besonders bevorzugten Ausführungsform ist daran gedacht, dass sämtliche der zwischen einer Spaltdichtung und einer Dichtmembran ausgebildeten Niederdruckbereiche der Formfüllstation mittels Niederdruckfluidkanälen kommunizierend miteinander verbunden sind und/oder dass sämtliche der von einer Spaltdichtung gegen einen Niederdruckbereich abgedichteten Hochdruckbereiche mittels Hochdruckfluidkanälen kommunizierend miteinander verbunden sind.

In bevorzugter Ausgestaltung ist des Weiteren daran gedacht, dass mindestens eine der flexiblen Dichtmembranen schlauchförmig ausgebildet ist, wobei ein erster Öffnungsrand der schlauchförmigen Dichtmembran form-, kraft- und/oder stoffschlüssig mit einem ersten der zwei zueinander verschieblich gelagerten Körperteile dichtend verbunden ist und wobei ein zweiter Öffnungsrand der schlauchförmigen Dichtmembran form-, kraft- und/oder stoffschlüssig mit dem zweiten der zwei zueinander verschieblich gelagerten Körperteile dichtend verbunden ist.

Für die Durchführung eines Reinigungsvorgangs der Formfüllstation kann vorgesehen sein, dass die Formfüllstation zur Spülung der Spalträume in eine Spülstellung bringbar ist, in der mindestens ein Hochdruckbereich mit einem Niederdruckbereich kommunizierend verbunden ist, wobei insbesondere eine Spülstellung vorgesehen ist, in der sämtliche der Niederdruckbereiche mit sämtlichen der Hochdruckbereiche kommunizierend verbunden sind.

Zur Entfernung von aus dem Hochdruckbereich in den Niederdruckbereich eindringendem Füllgut ist zudem daran gedacht, dass in mindestens einen der Niederdruckbereiche eines Spaltraumes ein mit einem Auffangbereich außerhalb der Formfüllstation kommunizierend verbundener Ableitkanal mündet, der zur Ableitung einer die Spaltdichtung überwindenden, aus dem Hochdruckbereich des Spaltraumes in den Niederdruckbereich eindringenden Leckageflüssigkeit dient.

Weitere Vorteile, Merkmale und Details der Erfindung ergeben sich aus den im Folgenden beschriebenen Ausführungsbeispielen unter Bezugnahme auf schematische Zeichnungen. Es zeigen:
- Fig. 1: eine stark schematisierte Darstellung einer Formfüllvorrichtung,
- Fig. 2: eine perspektivische Schnittdarstellung einer Formfüllstation einer erfindungs-gemäßen Formfüllvorrichtung vor der Formung und Befüllung eines Vorformlings,
- Fig. 3: die Schnittdarstellung der Formfüllstation aus Fig. 1 in orthogonaler Draufsicht,
- Fig. 4: eine perspektivische Schnittdarstellung der Formfüllstation aus Fig. 1 nach der Füllumformung des Vorformlings in einen Behälter,
- Fig. 5: die Schnittdarstellung der Formfüllstation aus Fig. 4 in orthogonaler Draufsicht,
- Fig. 6: eine perspektivische Schnittdarstellung der Formfüllstation aus Fig. 1 in einer Reinigungsstellung, und
- Fig. 7: die Schnittdarstellung der Formfüllstation aus Fig. 6 in orthogonaler Draufsicht.

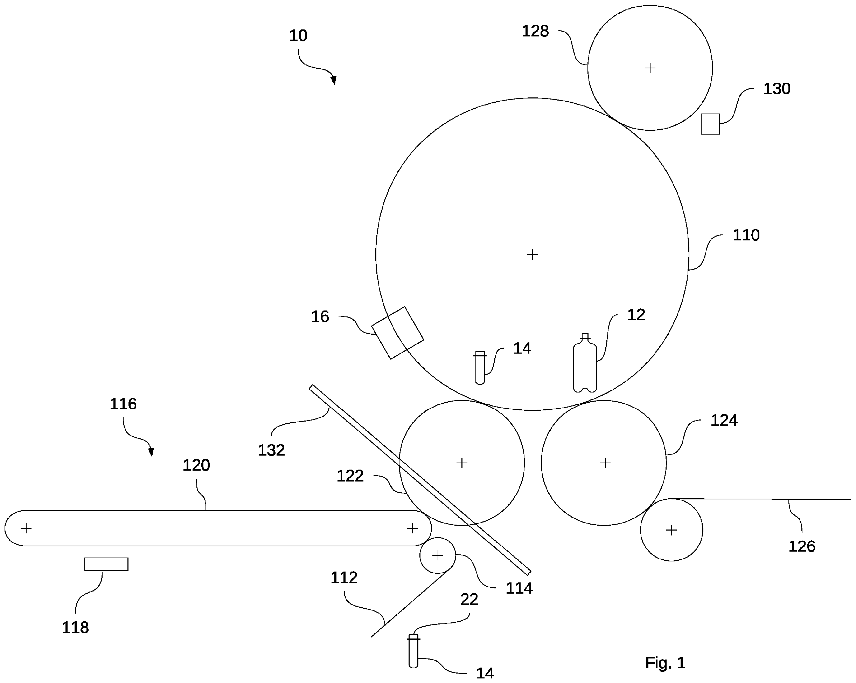

Der prinzipiell aus dem Stand der Technik bekannte Aufbau einer kombinierten Form- und Füllmaschine ist in Figur 1 dargestellt. Die Darstellung zeigt die bevorzugte Ausbildung einer solchen Füllvorrichtung 10 in der Art einer Rotationsmaschine mit einem Form- und Formfüllstationen 16 tragenden, rotierenden Arbeitsrad 110. Von einer Zuführeinrichtung 112 werden schematisch dargestellte Vorformlinge 14, die auch als Preforms bezeichnet werden, unter Verwendung eines Übergaberades 114 kontinuierlich einer Heizeinrichtung 116 zugeführt. Im Bereich der Heizeinrichtung 116, in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Heizeinrichtung 116 ist beispielsweise mit Heizelementen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizelemente 118 eignen sich beispielsweise IR-Strahler oder Licht emittierende Dioden oder NIR-Strahler. Da solche Heizeinrichtungen in vielfältiger Art im Stand der Technik bekannt sind und die konstruktiven Einzelheiten der Heizeinrichtung für die vorliegende Erfindung nicht wesentlich sind, kann auf eine detailliertere Beschreibung verzichtet und auf den Stand der Technik verwiesen werden, insbesondere auf den Stand der Technik zu Heizeinrichtungen von Blas- und von Streckblasmaschinen.

Nach einer ausreichenden Temperierung, auch thermische Konditionierung genannt, werden die Vorformlinge 14 von einem Übergaberad 122 zu einem rotationsfähig angeordneten, d.h. um eine vertikale Maschinenachse umlaufend antreibbaren Arbeitsrad 110 bzw. an Form- und Füllstationen 16 übergeben, die an dem Arbeitsrad 110 umfangsverteilt angeordnet sind. Das Arbeitsrad 110 ist mit einer Mehrzahl solcher Form- und Füllstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als flüssiges Druckmedium beim Formen dient.

Nach dem Formen und Füllen werden die Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Form- und Füllstation 16, die Expansion des Vorformlings 14 zu einem Behälter 12 inklusive Füllung mit einem Füllgut und ggf. inkl. Reckung, falls eine Reckstange vorgesehen ist, und die Entnahme des Behälters 12 aus der Form- und Füllstation 16.

Gemäß der Ausführungsform in Figur 1 ist weiterhin vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung der Entnahmeeinrichtung 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Heizeinrichtung 116 sind typischerweise eine Vielzahl von elektrischen und elektronischen Bauteilen angeordnet. Darüber hinaus sind die Heizelemente 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, kann zur Vermeidung elektrischer Probleme dafür gesorgt werden, dass ein unbeabsichtigter Eintrag von Feuchtigkeit in den Bereich der Heizeinrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Heizeinrichtung 116 gelangen kann.

Eine Handhabung der Vorformlinge 14 und/oder der Behälter 12 erfolgt vorzugsweise unter Verwendung von Zangen und/oder den Mündungsabschnitt 22 wenigstens bereichsweise von innen oder von außen beaufschlagenden Klemm- oder Steckdornen. Solche Handhabungsmittel sind ebenfalls aus dem Stand der Technik hinlänglich bekannt.

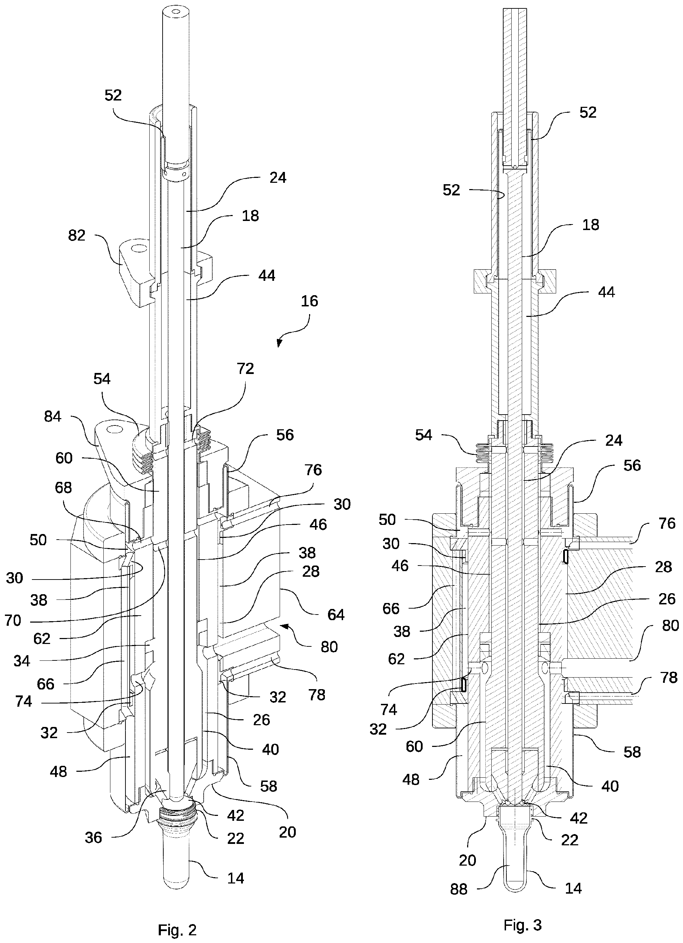

Die Figuren 2 und 3 zeigen ein Beispiel einer Formfüllstation 16 mit inneren Spalträumen 24, 26, 28, die erfindungsgemäß durch Spaltdichtungen 30, 32, 34, 20 in mit dem Innenraum 88 eines Vorformlings 14 verbundene Hochdruckbereiche 38, 40, 42 und zur Umgebung der Formfüllstation 16 durch Dichtmembranen 52, 54, 56, 58 abgedichtete Niederdruckbereiche 44, 46, 48, 50 aufgeteilt sind.

In den Fig. 2 und 3 ist die Formfüllstation 16 in einer Gebrauchsstellung gezeigt, in der ein Vorformling 14 mit seinem Mündungsbereich 22 in dichtende Anlage mit einem Anlagebereich einer Formfülldüse 20 der Formfüllstation 16 gebracht ist. In dieser Gebrauchsstellung ist die Formfülldüse 20 geschlossen, sodass noch kein Füllgut in den Innenraum 88 des Vorformlings 14 gelangen kann. Der Aufbau der gezeigten Formfüllstation 16 ist etwa teleskopartig mit einer innenliegenden Reckstange 18, einem die Reckstange 18 in einem Längsbereich in Umfangsrichtung umschließenden ersten hülsenförmigen Körperteil 60 und einem den ersten hülsenförmigen Körperteil 60 in einem Längsbereich in Umfangsrichtung umschließenden zweiten hülsenförmigen Körperteil 62. Diese Körperteile (inkl. Reckstange) 18, 60, 62 sind jeweils axial verschieblich in einem Gehäuseblock 64 der Formfüllstation 16 gelagert.

Die axial verschieblich in dem Gehäuseblock 64 der Formfüllstation 16 gelagerte Reckstange 18 ist in der gezeigten Gebrauchsstellung der Formfüllstation 16 mit ihrem vorformlingsseitigen Endbereich dichtend anliegend in einen zentralen Durchgang der Formfülldüse 20 eingetaucht. Der die Reckstange 18 auf ihrem Außenumfang dichtend umgreifende Körperbereich der Formfülldüse 20 bildet in diesem Beispiel eine erfindungsgemäße Spaltdichtung, die einen zwischen der Reckstange 18 und dem die Reckstange 18 umgreifenden ersten hülsenförmigen Körperteil 60 ausgebildeten Spaltraum 24 in einen im Mündungsbereich der Formfülldüse 20 befindlichen Hochdruckbereich 42 und einen im Kopfbereich der Formfüllstation 16 mittels einer Dichtmembran 52 zur Umgebung der Formfüllstation 16 abgedichteten Niederdruckbereich 44 trennt. Die schlauchförmig ausgebildete Dichtmembran 52 ist mit einem ersten Öffnungsrand dichtend an der Reckstange 18 und mit einem zweiten Öffnungsrand dichtend an dem ersten Körperteil 60 befestigt. Der Niederdruckbereich 44 ist somit gegen die Umgebung der Formfüllstation 16 abgedichtet. Bei der axialen Verschiebung der Reckstange 18 in den Innenraum 88 des Vorformlings 14 hinein gleitet der Außenumfang der Reckstange 18 dichtend an einer Innenwand der Formfülldüse 20, so dass ein mit bis zu 35 bar oder mit mehr als 35 bar in den Vorformling 14 eingeleitetes Füllgut am Eindringen in den Niederdruckbereich 44 oberhalb der Formfülldüse 20 gehindert wird. Jegliche Leckagen, die trotz der Abdichtung mittels der Spaltdichtung aus dem Hochdruckbereich 42 in den Niederdruckbereich 44 gelangen, werden von der Dichtmembran 52 am Austritt aus dem Spaltraum 24 gehindert. Die Dichtmembran 52 ermöglicht einen großen Hub der Reckstange von bis zu 250 mm oder von mehr als 250 mm. Wie gezeigt, kann die Dichtmembran 52 von dem kopfseitigen Endbereich des hülsenförmigen Körperteils 60 umschlossen sein, um ein faltenfreies Einstülpen und Ausstülpen der schlauchförmigen Dichtmembran 52 bei der axialen Verschiebung der Reckstange 18 zu unterstützen.

Der verschieblich zur Formfülldüse 20 und verschieblich zur Reckstange 18 gelagerte hülsenartigen Körperteil 60 bildet im vorliegenden Fall einen stößelartigen Schließkörper, mit dem die Formfülldüse 20 in eine Offenstellung und in eine Geschlossenstellung bringbar ist. Zur Verschiebung des Schließkörpers 60 gegenüber der Formfülldüse 20 kann im kopfseitig aus dem Gehäuseblock 64 herausragenden Endbereich des Schließkörpers 60 ein radial von dem Schließkörpers 60 abstehender Hubflansch 82 vorgesehen sein, der mit einer zum Beispiel als Kurvenbahn ausgebildeten Hubeinrichtung (nicht gezeigt) zusammenwirkt.

Der erste, den Schließkörper ausbildende hülsenartige Körperteil 60 ist von einem weiteren hülsenartigen Körperteil 62 umschlossen, wobei zwischen dem ersten Körperteil 60 und dem zweiten Körperteil 62 ein weiterer Spaltraum 26 ausgebildet ist, der ebenfalls von einer Spaltdichtung 34 in einen vorformlingsseitigen Hochdruckbereich 40 und in einen kopfseitigen Niederdruckbereich 46 unterteilt ist. Der vorformlingsseitige Hochdruckbereich 40 kann durch die Bewegung des Schließkörpers 60 in die Offenstellung mit dem Innenraum 88 des mit seinem Mündungsbereich 22 in dichtende Anlage mit der Formfülldüse 20 gebrachten Vorformling 14 kommunizierend verbunden werden. Der kopfseitige Niederdruckbereich 46 ist mit einer balgartigen Dichtmembran 54 abgedichtet. Die schlauchförmig ausgebildete Dichtmembran 54 ist mit einem ersten Öffnungsrand dichtend an dem Schließkörper 60 und mit einem zweiten Öffnungsrand dichtend an dem zweiten Körperteil 62 befestigt. Der Niederdruckbereich 46 ist somit gegen die Umgebung der Formfüllstation 16 abgedichtet. Insbesondere wegen des geringen Hubweges, den der Schließkörper 60 zur Öffnung bzw. zum Schließen der Formfülldüse 20 gegenüber dem zweiten Körperteil 62 zurücklegt, kann die Dichtmembran 54 ziehharmonikaartig als Faltenbalg ausgeformt sein.

Der den Schließkörper 60 in Umfangsrichtung umschließende zweite hülsenförmige Körperteil 62 ist im vorliegenden Fall axial verschiebbar in einem Durchgang eines Gehäuseblocks 64 gelagert. Vorformlingsseitig ist der Körperteil 62 bewegungsgekoppelt mit der Formfülldüse 20 verbunden. Mit einer axialen Verschiebung des Körperteils 62 kann die Formfülldüse 20 an den Mündungsbereich eines zum Beispiel unterhalb der Formfüllstation 16 in einer Füllform (nicht gezeigt) gehaltenen Vorformlings 14 angenähert oder von dort entfernt werden. Ähnlich wie zum Schließkörper 60 erläutert, kann im kopfseitigen Endbereich des Körperteils 62 ein radial abstehender Hubflansch 84 vorgesehen sein, der mit einer zum Beispiel als Kurvenbahn ausgebildeten Hubeinrichtung (nicht gezeigt) zusammenwirkt.

Zwischen der Innenwand des Gehäuseblocks 64 und der Außenwand des zweiten hülsenförmigen Körperteils 62 ist ein weiterer Spaltraum 28 ausgebildet. Zwei unterschiedliche, in einem Abstand zueinander unverschieblich an dem Gehäuseblock 64 gelagerte Spaltdichtungen 30, 32 begrenzen einen zwischen den Spaltdichtungen 30, 32 ausgebildeten Hochdruckbereich 38. Kopfseitig ist ein zwischen der ersten Spaltdichtung 30 und einer Dichtemembran 56 begrenzter Niederdruckbereich 50 ausgebildet. Im Bodenbereich ist der Gehäuseblock 64 mit einer Dichtmembran 58 gegen den hülsenförmigen Körperteil 62 abgedichtet. Zwischen der zweiten Spaltdichtung 32 und der Dichtmembran 58 ist somit ein weiterer gegen eine Umgebung der Formfüllstation 16 abgedichteter Niederdruckbereich 48 ausgebildet. Wie auch die Dichtmembran 52 zur Abdichtung der Reckstange 18 gegen den Schließkörper 60, sind die Dichtmembranen 56 und 58 schlauchförmig ausgeformt. Bei der axialen Verschiebung des zweiten Körperteils 62 im Durchgang des Gehäuseblocks 64 stülpt sich der an dem zweiten Körperteil 62 dichtend befestigte Öffnungsrand der Dichtmembranen 56, 58 jeweils in den Innenbereich ihrer schlauchförmigen Körper.

Zum Formen und Füllen des Vorformlings 14 wird ein Füllgut durch einen kommunizierend mit dem äußeren ringspaltförmigen Hochdruckbereich 38 verbundenen Füllgutkanal 80 in den Hochdruckbereich 38 eingeleitet. Die unterschiedlichen an dem Gehäuseblock 64 angeordneten Spaltdichtungen 30, 32 begrenzen den ringspaltförmigen Hochdruckbereich 38 und verhindern einen Austritt des mit einem Druck von bis zu 35 bar oder von mehr als 35 bar in den Hochdruckbereich eingeschleusten Füllgutes in die Niederdruckbereiche 48, 50. Von dem äußeren, den zweiten Körperteil in einem Längsabschnitt ringspaltförmig umgebenden Hochdruckbereich 38 gelangt das Füllgut durch einen oder mehrere die Hülsenwand des Körperteils 62 durchbrechende Hochdruckfluidkanäle 74 in den innenliegenden Hochdruckbereich 40. Durch eine axiale Verschiebung des Schließkörpers 60 in die Offenstellung wird der Hochdruckbereich 40 mit dem Innenraum 88 eines mit seinem Mündungsbereich 22 dichtend an der Formfülldüse 20 anliegenden Vorformlings 14 verbunden, sodass das Füllgut in den Innenraum 88 des Vorformlings 14 gelangen kann.

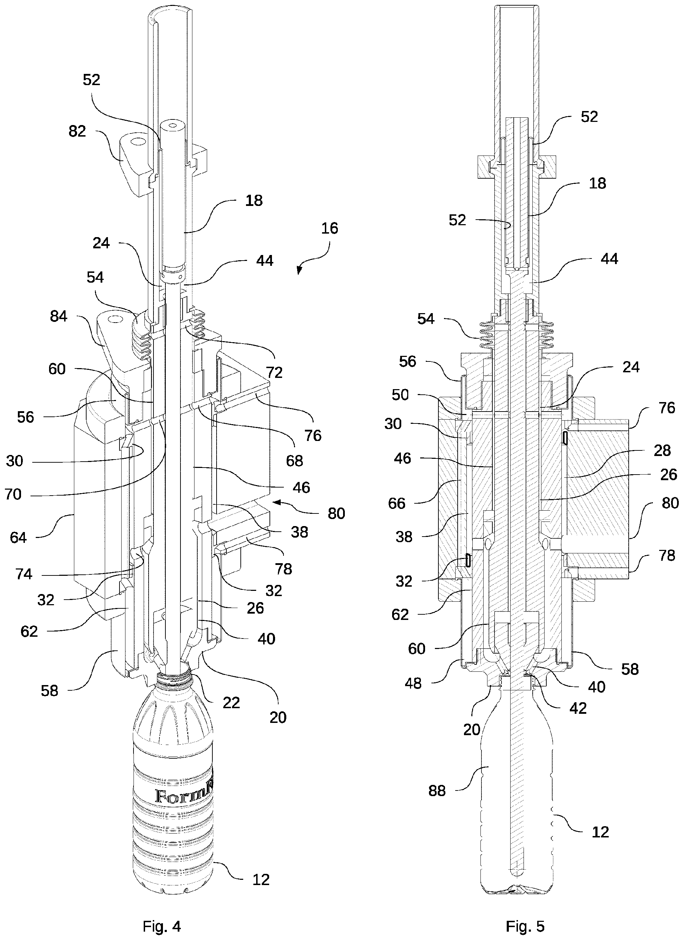

Die Figuren 4 und 5 zeigen die erfindungsgemäße Formfüllstation 16 mit einem aus dem Vorformling 14 geformten und befüllten Behälter 12. Der Schließkörper 60 befindet sich in einer die Formfülldüse 20 öffnenden Offenstellung. Während der Behälterausbildung wird die Reckstange 18 zum Führen und Strecken des Vorformlings 14 in den Innenraum 88 des Vorformlings 14 eingeschoben.

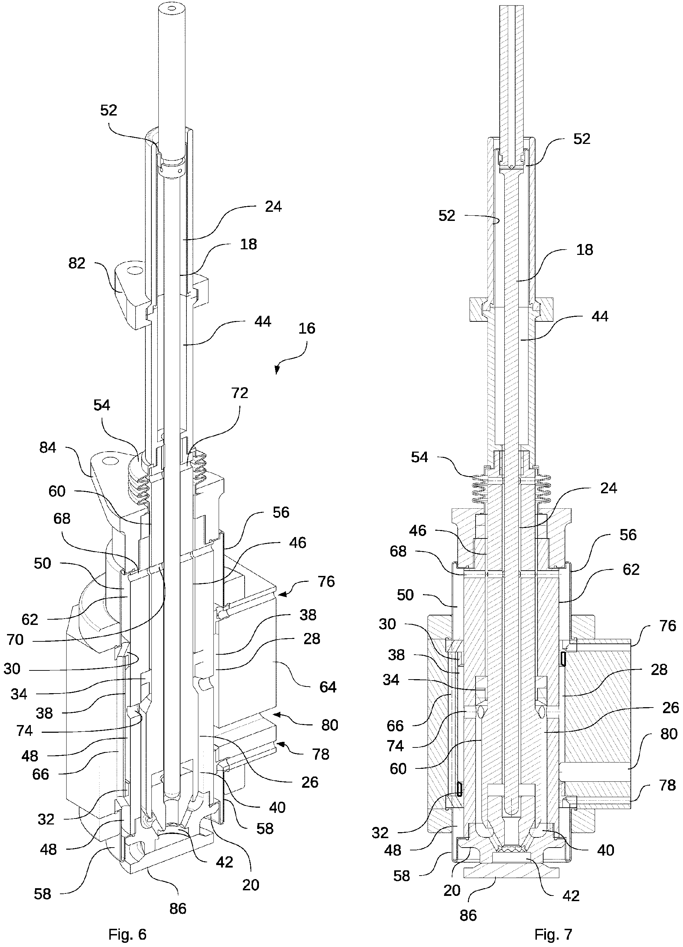

Die Figuren 6 und 7 zeigen eine erfindungsgemäße Formfüllstation 16 in einer Reinigungsstellung. In dieser Reinigungsstellung ist die Formfülldüse 20 mit einer Kappe 86 verschlossen, sodass ein in die Hochdruckbereiche eingeleitetes Spülfluid nicht durch die Formfülldüsenöffnung entweichen kann. Zum Erreichen der Reinigungsstellung ist die Reckstange 18 in eine Verschiebungsstellung verfahren, in der sich der Außenumfang der Reckstange 18 nicht mehr in dichtender Anlage mit dem zentralen Durchgang der Formfülldüse 20 befindet. Vorliegend ist der vorformlingsseitige Endbereich der Reckstange 18 in einen umfangserweiterten Bereich des zentralen Durchgangs der Formfülldüse 20 verschoben. In dieser Reinigungsstellung sind die Hochdruckbereiche 38, 40, 42 über den zentralen Durchgang der Formfülldüse 20 mit den Niederdruckbereichen 44, 46, 48 und 50 verbunden.

Die Niederdruckbereiche 44, 46, 48, 50 sind untereinander durch Niederdruckfluidkanäle 66, 68, 70, 72 verbunden. Bei einer Einleitung eines Spülfluids durch den Füllgutkanal 80 oder die Spülfluidkanäle 76, 78 können die Spalträume 24, 26, 28 zur Entfernung etwaiger Füllgutrückstände vollständig gespült werden.

Zwischen den Figuren 2 bis 7 tragen gleiche Teile der erfindungsgemäßen Füllformstation 16 gleiche Bezugszeichen. Da die Figuren 2 bis 7 dieselbe Formfüllstation 16 in unterschiedlichen Ansichten und Gebrauchsstellungen zeigt, wurde aus Gründen der Übersichtlichkeit auf eine strikte Wiederholung der Bezugszeichen zwischen den Figuren 2 bis 7 verzichtet.

## Patentansprüche

1. Formfüllvorrichtung (10) zur Herstellung von mit einem flüssigen Füllgut gefüllten Behältern (12) aus thermisch konditionierten Vorformlingen (14), mit wenigstens einer Formfüllstation (16) zum Formen und Füllen eines Vorformlings (14), wobei die Formfüllstation (16) eine längsverschieblich gelagerte Reckstange (18) zum Führen und Strecken des Vorformlings (14) aufweist, **dadurch gekennzeichnet, dass** die Formfüllstation (16) mindestens einen Spaltraum (24; 26; 28) zwischen zwei zueinander verschieblich gelagerten Körperteilen (18; 60; 62; 64) der Formfüllstation (16) aufweist, der in einer Gebrauchsstellung der Formfüllstation (16) mittels einer auf einer Oberfläche eines der Körperteile wirkenden Spaltdichtung (30; 32; 34; 36) in einen Hochdruckbereich (38; 40; 42) und einen Niederdruckbereich (44; 46; 48; 50) abdichtend getrennt ist, wobei der Hochdruckbereich (38; 40; 42) kommunizierend mit dem Innenraum (86) des Vorformlings (14) verbindbar ist und wobei der Niederdruckbereich (44; 46; 48; 50) mittels einer flexiblen, jeweils dichtend mit den zueinander beweglichen Körperteilen verbundenen Dichtmembran (52; 54; 56; 58) abgedichtet ist, wobei einer der Spaltraume (24; 26; 28) zwischen der Reckstange (18) und einem die Reckstange (18) zumindest in einem Längsabschnitt in Umfangsrichtung umschließenden ersten hülsenförmigen Körperteil (60) ausgebildet ist.

2. Formfüllvorrichtung (10) nach Anspruch 1, **dadurch gekennzeichnet, dass** einer der Spalträume (24; 26; 28) zwischen einem die Reckstange (18) zumindest in einem Längsabschnitt in Umfangsrichtung umschließenden ersten hülsenförmigen Körperteil (60) und einem das erste hülsenförmige Körperteil (60) zumindest in einem Längsabschnitt in Umfangsrichtung umschließenden zweiten hülsenförmige Körperteil (62) ausgebildet ist.

3. Formfüllvorrichtung (10) nach einem der vorangegangenen Ansprüche, **dadurch gekennzeichnet, dass** einer der Spalträume (24; 26; 28) zwischen einem äußeren Gehäuseblock (64) der Formfüllstation (16) und einem zumindest in einem Längsabschnitt in Umfangsrichtung von dem Gehäuseblock (64) umschlossenen innenliegenden Körperteil (62) ausgebildet ist.

4. Formfüllvorrichtung (10) nach einem der vorangegangenen Ansprüche, **dadurch gekennzeichnet, dass** zumindest einer der Spalträume (24; 26; 28) ein Ringspaltraum ist, der zwischen zwei axial zueinander verschieblichen Körperteilen der Formfüllstation (16) ausgebildet ist.

5. Formfüllvorrichtung (10) nach einem der vorangegangenen Ansprüche, **dadurch gekennzeichnet, dass** einer der Spalträume (26) einen zwischen zwei Spaltdichtungen (30; 32) ausgebildeten Hochdruckbereich (38) aufweist und zwei jeweils mit einer Dichtmembran (54; 58) abgedichtete Niederdruckbereiche (48; 50).

6. Formfüllvorrichtung (10) nach einem der vorangegangenen Ansprüche, **dadurch gekennzeichnet, dass** die Formfüllstation (16) mindestens zwei zwischen einer Spaltdichtung (30; 32; 34; 36) und einer Dichtmembran (52; 54; 56; 58) ausgebildete Niederdruckbereiche (44; 46; 48; 50) aufweist, die mittels eines Niederdruckfluidkanals (66; 68; 70; 72) kommunizierend miteinander verbunden sind.

7. Formfüllvorrichtung (10) nach einem der vorangegangenen Ansprüche, **dadurch gekennzeichnet, dass** die Formfüllstation (16) mindestens zwei von einer Spaltdichtung (30; 32; 34) gegen einen Niederdruckbereich (48; 50) abgedichteten Hochdruckbereiche (38; 40) aufweist, die zueinander verschiebbar angeordnet sind, wobei diese zwei zueinander verschieblichen Hochdruckbereiche (38; 40) mittels eines Hochdruckfluidkanals (74) kommunizierend miteinander verbunden sind.

8. Formfüllvorrichtung (10) nach einem der vorangegangenen Ansprüche, **dadurch gekennzeichnet, dass** sämtliche der zwischen einer Spaltdichtung (30; 32; 34; 36) und einer Dichtmembran (52; 54; 56; 58) ausgebildeten Niederdruckbereiche (44; 46; 48; 50) der Formfüllstation (16) mittels Niederdruckfluidkanälen (66; 68; 70; 72) kommunizierend miteinander verbunden sind und/oder dass sämtliche der von einer Spaltdichtung (30; 32; 34; 36) gegen einen Niederdruckbereich (44; 46; 48; 50) abgedichteten Hochdruckbereiche (38; 40; 42) mittels Hochdruckfluidkanälen (74) kommunizierend miteinander verbunden sind.

9. Formfüllvorrichtung (10) nach einem der vorangegangenen Ansprüche, **dadurch gekennzeichnet, dass** mindestens eine der flexiblen Dichtmembranen (52; 54; 56; 58) schlauchförmig ausgebildet ist, wobei ein erster Öffnungsrand der schlauchförmigen Dichtmembran (52; 54; 56; 58) form-, kraft- und/oder stoffschlüssig mit einem ersten der zwei zueinander verschieblich gelagerten Körperteile (18; 60; 62; 64) dichtend verbunden ist und wobei ein zweiter Öffnungsrand der schlauchförmigen Dichtmembran (52; 54; 56; 58) form-, kraft- und/oder stoffschlüssig mit dem zweiten der zwei zueinander verschieblich gelagerten Körperteile (18; 60; 62; 64) dichtend verbunden ist.

10. Formfüllvorrichtung (10) nach einem der vorangegangenen Ansprüche, **dadurch gekennzeichnet, dass** die Formfüllstation (16) zur Spülung der Spalträume (24; 26; 28) in eine Spülstellung bringbar ist, in der mindestens ein Hochdruckbereich (38; 40; 42) mit einem Niederdruckbereich (44; 46; 48; 50) kommunizierend verbunden ist, wobei insbesondere eine Spülstellung vorgesehen ist, in der sämtliche der Niederdruckbereiche (44; 46; 48; 50) mit sämtlichen der Hochdruckbereiche (38; 40; 42) kommunizierend verbunden sind.

11. Formfüllvorrichtung (10) nach einem der vorangegangenen Ansprüche, **dadurch gekennzeichnet, dass** in mindestens einen der Niederdruckbereiche (44; 46; 48; 50) eines Spaltraumes (24; 26; 28) ein mit einem Auffangbereich außerhalb der Formfüllstation (16) kommunizierend verbundener Ableitkanal (76; 78) mündet, der zur Ableitung einer aus dem Hochdruckbereich (38; 40; 42) in den Niederdruckbereich (44; 46; 48; 50) eindringenden Leckageflüssigkeit dient.

## Claims

1. Mould filling device (10) for the production of containers filled with a liquid filling material (12) that are made out of thermally conditioned preforms (14), with at least one mould filling station (16) for forming and filling a preform (14), wherein the mould filling station (16) comprises a longitudinally moveable stretching bar (18) for guiding and stretching the preform (14), **characterized in that** the mould filling station (16) comprises at least one gap space (24; 26; 28) between two mounted body parts (18; 60; 62; 64) of the mould filling station (16) that can be moved towards one another, which gap space (24; 26; 28), in a use position of the mould filling station (16), is separated in a sealing manner into a high-pressure area (38; 40; 42) and a low-pressure area (44; 46; 48; 50) by means of a gap seal (30; 32; 34; 36) acting on a surface of one of the body parts, wherein the high-pressure area (38; 40; 42) can be connected in a communicating manner to the interior space (86) of the preform (14), and wherein the low-pressure area (44; 46; 48; 50) is sealed by means of a flexible sealing membrane (52; 54; 56; 58) respectively connected in a sealing manner to body parts that can be moved towards one another, wherein one of the gap spaces (24; 26; 28) is formed between the stretch bar (18) and a first sleeve-shaped body part (60) enclosing the stretch bar (18) in the circumferential direction at least in a longitudinal section.

2. Mould filling device (10) according to Claim 1, **characterized in that** one of the gap spaces (24; 26; 28) is formed between a first sleeve-shaped body part (60) enclosing the stretch bar (18) in the circumferential direction at least in a longitudinal section and a second sleeve-shaped body part (62) enclosing the first sleeve-shaped body part (60) in the circumferential direction at least in a longitudinal section.

3. Mould filling device (10) according to any one of the preceding claims, **characterized in that** one of the gap spaces (24; 26; 28) is formed between an outer housing block (64) of the mould filling station (16) and an internal body part (62) enclosed in the circumferential direction in a longitudinal section by the housing block (64) .

4. Mould filling device (10) according to any one of the preceding claims, **characterized in that** at least one of the gap spaces (24; 26; 28) is an annular gap space, which is formed between two body parts of the mould filling station (16) that can be axially moved towards one another.

5. Mould filling device (10) according to any one of the preceding claims, **characterized in that** one of the gap spaces (26) comprises a high-pressure area (38) formed between two gap seals (30; 32) and two low-pressure areas (48; 50) each sealed with a sealing membrane (54; 58) .

6. Mould filling device (10) according to any one of the preceding claims, **characterized in that** the mould filling station (16) comprises at least two low-pressure areas (44; 46; 48; 50) formed between a gap seal (30; 32; 34; 36) and a sealing membrane (52; 54; 56; 58), which are connected to one another in a communicating manner by means of a low-pressure fluid channel (66; 68; 70; 72).

7. Mould filling device (10) according to any one of the preceding claims, **characterized in that** the mould filling station (16) comprises at least two high-pressure areas (38; 40) that are arranged so that they can be moved towards one another and are sealed against a low-pressure area (48; 50) by a gap seal (30; 32; 34), wherein these two high-pressure areas (38; 40) that can be moved towards one another are connected to one another in a communicating manner by means of a high-pressure fluid channel (74).

8. Mould filling device (10) according to any one of the preceding claims, **characterized in that** all of the low-pressure areas (44; 46; 48; 50) formed between a gap seal (30; 32; 34; 36) and a sealing membrane (52; 54; 56; 58) of the mould filling station (16) are connected to one another in a communicating manner by means of low-pressure fluid channels (66; 68; 70; 72) and/or that all the high-pressure areas (38; 40; 42) sealed against a low-pressure area (44; 46; 48; 50) by a gap seal (30; 32; 34; 36) are connected to one another in a communicating manner by means of high-pressure fluid channels (74).

9. Mould filling device (10) according to any one of the preceding claims, **characterized in that** at least one of the flexible sealing membranes (52; 54; 56; 58) is tubular, wherein a first opening edge of the tubular sealing membrane (52; 54; 56; 58) is tightly connected in a positive-locking, force-locking, and/or firmly bonded manner to a first of the two body parts (18; 60; 62; 64) that are mounted in a manner so they can be moved towards one another, and wherein a second opening edge of the tubular sealing membrane (52; 54; 56; 58) is tightly connected in a positive-locking, force-locking, or firmly bonded manner to the second of the two body parts (18; 60; 62; 64) that are mounted in a manner so they can be moved towards one another.

10. Mould filling device (10) according to any one of the preceding claims, **characterized in that** the mould filling station (16) for flushing the gap spaces (24; 26; 28) can be brought into a flushing position, in which at least one high-pressure area (38; 40; 42) is connected in a communicating manner to a low-pressure area (44; 46; 48; 50), wherein, in particular, a flushing position is provided, in which all of the low-pressure areas (44; 46; 48; 50) are connected in a communicating manner to all of the high-pressure areas (38; 40; 42).

11. Mould filling device (10) according to any one of the preceding claims, **characterized in that** a discharge channel (76; 78) connected in a communicating manner to a collection area outside of the mould filling station (16) flows into at least one of the low-pressure areas (44; 46; 48; 50) of a gap space (24; 26; 28), which discharge channel (76; 78) serves to discharge a leakage liquid from the high-pressure area (38; 40; 42) penetrating into the low-pressure area (44; 46; 48; 50) .

## Revendications

1. Dispositif de remplissage (10) de moule pour la fabrication, à partir de préformes (14) thermiquement conditionnées, de récipients (12) remplis d'un produit de remplissage liquide, avec au moins une station de remplissage (16) de moule pour le moulage et le remplissage d'une préforme (14), la station de remplissage de moule (16) présentant une barre d'étirage (18) logée de façon à pouvoir coulisser longitudinalement pour guider et étirer la préforme (14), **caractérisé en ce que** la station de remplissage (16) de moule présente, entre deux parties de corps (18; 60; 62; 64) de la station de remplissage (16) de moule disposées de façon à pouvoir coulisser l'une par rapport à l'autre, au moins un interstice (24; 26; 28), lequel est, en une position d'utilisation de la station de remplissage (16) de moule, subdivisé de façon étanche en une zone à haute pression (38 ; 40 ; 42) et une zone à basse pression (44; 46; 48; 50), subdivision réalisée au moyen d'un joint interstitiel (30; 32; 34; 36) agissant sur une surface de l'une des parties de corps, la zone à haute pression (38; 40; 42) pouvant être mise en communication avec l'espace intérieur (86) de la préforme (14) et la zone à basse pression (44; 46; 48; 50) étant étanchéifiée au moyen d'une membrane d'étanchéification (52; 54; 56; 58) flexible respectivement reliée de manière étanche aux parties de corps mobiles l'une par rapport à l'autre, l'un des interstices (24; 26; 28) étant formé entre la barre d'étirage (18) et une première partie de corps (60) en forme de douille qui entoure en sens périphérique au moins une section longitudinale la barre d'étirage (18)

2. Dispositif de remplissage (10) de moule selon la revendication 1, **caractérisé en ce que** l'un des interstices (24; 26; 28) est formé entre une première partie de corps (60) en forme de douille qui entoure en sens périphérique au moins une section longitudinale la barre d'étirage (18) et une seconde partie de corps (62) en forme de douille qui entoure en sens périphérique au moins une section longitudinale de la première partie de corps (60).

3. Dispositif de remplissage (10) de moule selon l'une des revendications précédentes, **caractérisé en ce que** l'un des interstices (24; 26; 28) est formé entre un boîtier (64) extérieur de la station de remplissage (16) de moule et une partie de corps (62) intérieure dont au moins une section longitudinale est entourée en sens périphérique par le boîtier (64).

4. Dispositif de remplissage (10) de moule selon l'une des revendications précédentes, **caractérisé en ce que** l'un au moins des interstices (24; 26; 28) est un interstice annulaire formé entre deux parties de corps de la station de remplissage (16) de moule pouvant coulisser axialement l'une par rapport à l'autre.

5. Dispositif de remplissage (10) de moule selon l'une des revendications précédentes, **caractérisé en ce que** l'un des interstices (26) présente une zone à haute pression (38) formée entre deux joints interstitiels (30; 32) et deux zones à basse pression (48; 50) respectivement étanchéifiées au moyen d'une membrane d'étanchéification (54; 58).

6. Dispositif de remplissage (10) de moule selon l'une des revendications précédentes, **caractérisé en ce que** la station de remplissage (16) de moule présente au moins deux zones à basse pression (44; 46; 48; 50) formées entre un joint interstitiel (30; 32; 34; 36) et une membrane d'étanchéification (52; 54; 56; 58) et reliées de façon à pouvoir communiquer par un canal (66; 68; 70; 72) pour fluide à basse pression.

7. Dispositif de remplissage (10) de moule selon l'une des revendications précédentes, **caractérisé en ce que** la station de remplissage (16) de moule présente au moins deux zones à haute pression (38; 40) étanchéifiées par rapport à une zone à basse pression (48; 50) par un joint interstitiel (30; 32; 34) et agencées de façon à pouvoir coulisser l'une par rapport à l'autre, ces deux zones à haute pression (38; 40) pouvant coulisser l'une par rapport à l'autre étant reliées de façon à pouvoir communiquer par un canal (74) pour fluide à haute pression.

8. Dispositif de remplissage (10) de moule selon l'une des revendications précédentes, **caractérisé en ce que** toutes les zones à basse pression (44; 46; 48; 50) de la station de remplissage (16) de moule formées entre un joint interstitiel (30; 32; 34; 36) et une membrane d'étanchéification (52; 54; 56; 58) sont reliées de façon à pouvoir communiquer par des canaux (66; 68; 70; 72) pour fluide à basse pression et/ou **en ce que** toutes les zones à haute pression (38; 40; 42) étanchéifiées par rapport à une zone à basse pression (44; 46; 48; 50) par un joint interstitiel (30; 32; 34; 36) sont reliées de façon à pouvoir communiquer par des canaux (74) pour fluide à haute pression.

9. Dispositif de remplissage (10) de moule selon l'une des revendications précédentes, **caractérisé en ce que** l'une au moins des membranes d'étanchéification (52; 54; 56; 58) est de forme tubulaire, un premier bord d'ouverture de la membranes d'étanchéification tubulaire (52; 54; 56; 58) étant relié de manière étanche par complémentarité de forme, par accouplement à transmission de force et/ou par assemblage de matériau à une première des deux parties de corps (18; 60; 62; 64) agencées de façon à pouvoir coulisser l'une par rapport à l'autre, et un second bord d'ouverture de la membranes d'étanchéification tubulaire (52; 54; 56; 58) étant relié de manière étanche par complémentarité de forme, par accouplement à transmission de force ou par assemblage de matériau à la seconde des deux parties de corps (18; 60; 62; 64) agencées de façon à pouvoir coulisser l'une par rapport à l'autre.

10. Dispositif de remplissage (10) de moule selon l'une des revendications précédentes, **caractérisé en ce que** la station de remplissage (16) de moule peut, pour le rinçage des interstices (24; 26; 28), être placée en une position de rinçage dans laquelle au moins une zone à haute pression (38; 40; 42) est reliée à une zone à basse pression (44; 46; 48; 50) de façon à pouvoir communiquer avec celle-ci, une position de rinçage notamment étant prévue dans laquelle toutes les zones à basse pression (44; 46; 48; 50) sont reliées à toutes les zones à haute pression (38; 40; 42) de façon à pouvoir communiquer avec celles-ci.

11. Dispositif de remplissage (10) de moule selon l'une des revendications précédentes, **caractérisé en ce qu'un** canal d'évacuation (76; 78) relié à une zone collectrice extérieure à la station de remplissage (16) de moule et servant à l'évacuation de liquide de fuite provenant de la zone à haute pression (38; 40; 42) et pénétrant dans la zone à basse pression (44; 46; 48; 50) débouche dans l'une au moins des zones à basse pression (44; 46; 48; 50) d'un interstice (24; 26; 28).
